# EUROPEAN PATENT SPECIFICATION

(11) **EP 2 074 026 B1**
(45) Date of publication and mention of the grant of the patent: **08.09.2010**
(21) Application number: 06794809.1
(22) Date of filing: 18.10.2006
(51) Int. Cl.: B64C 13/28, F16H 25/20

(54) **JAM-TOLERANT REDUNDANT DIFFERENTIAL-TYPE ACTUATORS**
BLOCKIERUNGSTOLERANTE DIFFERENTIAL-STELLGLIEDER
ACTIONNEURS DE TYPE DIFFÉRENTIEL À REDONDANCE RÉSISTANT AU BLOCAGE

(43) Date of publication of application: 01.07.2009
(73) Proprietor: Moog Inc., East Aurora, NY 14052 (US)
(72) Inventor: BAKER, Michael Charles, Gretton Gloucester GL54 5ER (GB); MILES, Nicholas J., Tewkesbury Gloucester GL20 8NA (GB)
(74) Representative: Bibby, William Mark
(86) International application number: PCT/GB2006/003866
(87) International publication number: WO 2008/047066

(56) References cited:
- EP-A- 0 901 960
- WO-A-91/05698
- US-A- 4 858 491

## Description

### Technical Field

The present invention relates generally to jam-tolerant dual-redundant differential-type actuators, and, more particularly, to improved actuators that can be used to drive aircraft flight control surfaces, various process control valves, and the like.

### Background Art

In aircraft applications, it is necessary to controllably move various airfoil surfaces, such as flaps, ailerons, rudder, and the like. It is generally important to provide a flight control system having certain layers of redundancy such that should one portion of the system fail, another portion will allow for continued control of the airfoil surface.

In the earliest of flight control systems, these various airfoil surfaces were controlled mechanically. As aircraft grew in size and complexity, hydraulic servo-control systems were employed. These generally contemplated that there be a central pump, and multiple conduits to convey hydraulic fluid and signals to various remotely-located actuators. While this worked acceptably well from a performance point-of-view, it was relatively heavy. As these systems became more and more efficient, it was thought desirable to progressively reduce the weight of the flight control system.

Fly-by-wire systems have also been developed. In these types of systems, an electrical control signal is sent to a remotely-located actuator for causing a controlled movement of an associated airfoil surface. To achieve redundancy, the same control signal was routed through various paths such that if there was an interruption in one path, the electrical control signal could be conveyed by another path(s) to the actuator. At the actuator, it was also desirable to incorporate redundancy to allow for continued control of the aircraft should one portion of the system become disabled. Fly-b-wire refers to the method of providing the desired control signal to the actuator, not the method for delivering the necessary power. For instance, a hydraulic actuator can be "fly-by-wire" because the command signal is generated or modified by a computer system. This is distinct from conventional flight controls where there is a direct physical connection (*e.g*., through wires, rods, etc.) between the pilot and the surface to be controlled. Thus, the term "fly-by-wire" is applicable to any form of powered assistance.
A significant disadvantage with electro-mechanical actuators is that they have the potential to jam in was that hydraulic actuators will not. For example, a motor's windings may melt and jam the motor, a gear tooth may break off and jam a gearbox, etc. These types of failures may well happen at some point. A hydraulic actuator typically doesn't encounter similar catastrophic failures. If a hydraulic system does fail, it is relatively easy to allow the actuator to "free wheel" by opening a small valve across the actuator control ports. This allows the flight surface to be driven by a second redundant actuator. With a mechanical system, this is much more difficult, and has typically been addressed through the use of shear pins, high power clutches, etc. These tend to be heavy and generally unsuitable. The present invention circumvents many of these disadvantages and allows the actuator to continue to function, albeit more slowly.
Accordingly, it would be generally desirable to provide improved jam-tolerant redundant actuators for use in such applications, and in other non-aircraft applications requiring these attributes.
US 4,858,491, which constitutes the closest prior art, describes a fail free actuator assembly comprising two drive shafts coupled to a common output bracket via a linkage consisting of three spur gears. The actuator assembly also includes a monitor device. The monitor device is not concerned with the transmission of drive, but is used to detect for a difference in the rate at which the drive shafts rotate. If the monitor device detects a speed differential the device causes a quick-release actuator to decouple the output bracket from the drive shafts.

### Disclosure of the Invention

With parenthetical reference to the corresponding parts, portions or surfaces of the disclosed embodiment, merely for purposes of illustration and not by way of limitation, the present invention provides an improved jam-tolerant dual-redundant differential-summing actuator.
According to the invention there is provided a jam-tolerant dual-redundant differential-summing actuator, comprising the features of independent claim 1.

The first and second drivers may include sprockets, an endless chain, ballscrews or the like. Each ballscrew may carry a rack. An idler pinion may be mounted on the output member, and the idler pinion may matingly engage the racks.

The first and second drivers may include worms and the actuator may further include a wheel rotatably mounted on the output member and matingly engaging the worms.

A first motor may be arranged to rotate the first driver, and a second motor may be arranged to rotate the second driver.

The force exerted by the linkage on the output member may be constant, and may be independent of the velocity of the output member.

Accordingly, the general object of the invention is to provide an improved jam-tolerant dual-redundant actuator.

Another object is to provide an improved jam-tolerant dual-redundant differential-summing actuator.

These and other objects and advantages will become apparent from the foregoing and ongoing written specification, the drawings and the appended claims.

### Brief Description of the Drawings

Fig. 1 is a schematic view of a first form of the improved jam-tolerant dual-redundant differential-summing actuator, this embodiment using ballscrews to move opposed and facing racks relative to an intermediate pinion.

Fig. 2 is a schematic view of a second form of the improved actuator, this view showing outboard gears (rather than ballscrews), used to move the racks relative to the intermediate pinion.

Fig. 3 is a schematic view of a third form of the improved actuator, this view showing the use helical worm gears, in lieu of the ballscrew and gear arrangements of the previous figures.

Fig. 4 is a schematic view of a fourth form of the improved actuator, this view showing the use of an endless chain to move the actuator rod.

Fig. 5 is a schematic view of a fifth form of the improved actuator, this view also using an endless chain to move the actuator rod.

### Disclosure of the Preferred Embodiments

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (*e.g.*, cross-hatching, arrangement of parts, proportion, degree, etc.) together with the specification; and are to be considered a portion of the entire written description of this invention. As used in the following description, the terms "horizontal", "vertical", "left", "right", "up" and "down", as well as adjectival and adverbial derivatives thereof (*e.g*., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

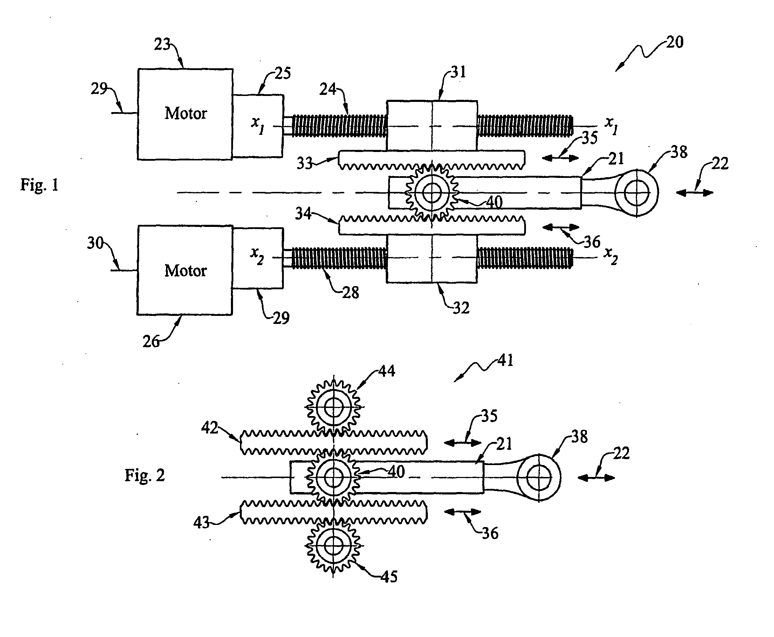

Referring now to the drawings, the present invention broadly provides an improved jam-tolerant dual-redundant differential-summing actuator. Various forms and embodiments are shown in Figs. 1-5. In each of these forms, the improved actuator broadly includes a first driver adapted to be rotated about a first axis, a second driver adapted to be rotated about a second axis, a movable output member, and a linkage connecting the first and second drivers to the output member such that, when the drivers are rotated simultaneously in the appropriate angular directions, the output member will be moved in one direction at a first velocity, but, when one driver is rotated in the appropriate direction and the other driver is stationary, the output member will be moved in the one direction at a second velocity that is substantially equal to one-half of the first velocity, whereby motion of the output member in the one direction will continue at half the velocity even if one of the drivers becomes stationary, such as attributable to a jam.

In another aspect, the improved actuator includes a first driver adapted to be rotated about a first axis and having a first surface speed, a second driver adapted to be rotated about a second axis and having a second surface speed; movable output member; and a linkage connecting the first and second drivers to the output member such that the output member will be moved at a velocity that is substantially proportional to the average surface speed of the drivers.

As indicated above, five different embodiments of the improved actuator are depicted in Figs. 1-5, respectively. These different embodiments, each of which may be regarded as presently preferred, are illustrated to depict the breadth of the various mechanical implementations of the present invention. In view of this, the description will be most complete with respect to the first embodiment shown in Fig. 1, it being understood that the structure shown in Figs. 2-5 will be somewhat abbreviated.

### First Embodiment (Fig. 1)

Referring now to Fig. 1, a first embodiment of the improved actuator is generally indicated at 20. This first embodiment uses two ballscrews to drive an output member 21 in either horizontal direction, as indicated by bidirectional arrow 22.

The first embodiment includes a first motor 23 that is arranged to rotate a screw 24 through an intermediate gear reduction mechanism 25. A second motor 26 is arranged to rotor a second screw 28 through an intermediate gear reduction unit 29. The first screw 24 is arranged to be selectively rotated in either angular direction about its axis *x₁*-*x₁*, and the second screw 28 is similarly arranged to be selectively rotated in either angular direction about its axis *x₂-x₂*. Motors 23 and 26 are adapted to be supplied with the same input electrical signal via lines 29, 30, respectively.

First and second nuts 31, 32 matingly engage the first and second screws 24, 28 so as to translate rotational movement of the associated screws into translational movement of racks 33, 34, respectively, mounted thereon. The linear motion of these racks is indicated by bidirectional arrows 35, 36.

The output member 21 is shown as being in the form of a rod having an eye 38 at its rightward end. A idler pinion 40 is mounted on the left marginal end portion of the rod and matingly engages the facing teeth on racks 33, 34.

Thus, if motors 23 and 26 are operated simultaneously to rotate their associated screws in the same angular direction, the nuts 31, 32 will be translated horizontally therealong in the same direction and at the same velocity. When this occurs, pinion 40 will not rotate, and such linear movement of the nuts and racks will be transmitted through the nonrotating pinion to the output member 21. Hence, the output member will be moved horizontally at the same speed as the speed of each of racks 33, 34.

However, should one of the racks stop moving (for whatever reason), the other rack will continue to move, causing some rotation of pinion 40. Hence, in this condition, the output member will continue to be moved in the desired direction, and with the same force, but at one-half the velocity that it would have moved had both racks been moving at the same time. For example, assume that the actuator is in the position shown in Fig. 1 and that appropriate signals are supplied to the motors. Assume further that the first nut is jammed, or otherwise fails to move for whatever reason. The signal supplied to the second motor will cause second screw 28 to rotate to translate nut 32 in the appropriate horizontal direction along axis *x₂-x₂*. This motion of nut 32 will carry with it like motion of rack 34. However, because rack 33 is stationary, idler pinion 40 will rotate in a counterclockwise direction. Hence, the output member will be moved in the appropriate direction at one-half the average velocity of the racks. Of course, if when rack is stationary, this will reduce to one-half of the velocity of the moving rack.

Of course, if nut 32 were to become stationary while nut 31 moved, the same effect would still obtain. In this regard, it should be noted that the full force will continue to be generated even though one of the prime movers is jammed or otherwise fails to move.

### Second Embodiment (Fig. 2)

Referring now to Fig. 2, a second form of the improved actuator is generally indicated at 41. Inasmuch as the second embodiment utilizes some portions of the same structure previously described with the first embodiment, the same reference numeral will refer to previously-described structure. Thus, the second embodiment is shown as having an output member 21 provided with an eye 38 at its right end, and an idler pinion 40 at its left end.

In this second form, the motors and gear reduction units have been omitted. The device still includes first and second racks, indicated at 42, 43, respectively, which are arranged to be moved horizontally by driven gears 44, 45, respectively. In other words, suitable motors and gear reduction units (not shown) are arranged to selectively rotate gears 44, 45 in the appropriate angular directions to translate the associated racks 42, 43, respectively in a horizontal direction, as again indicated by arrows 35, 36. As previously indicated, these racks also engage the idler pinion 40.

Thus, if the gears 44, 45 are rotated in the appropriate angular direction to translate the associated racks in the same direction and at the same velocity, the pinion will not rotate, and such motion of the racks will be transmitted to the output member 21. However, should either rack become stationary (for whatever reason), while the other rack moves, then the output member will be translated in the same direction as the moving rack, albeit at one-half of the velocity of the moving rack. Should the racks both move, albeit at different speeds, then the output member will be moved at the average velocity of the two racks. Here again, the force exerted on the output member will be the same, even though its velocity has been reduced.

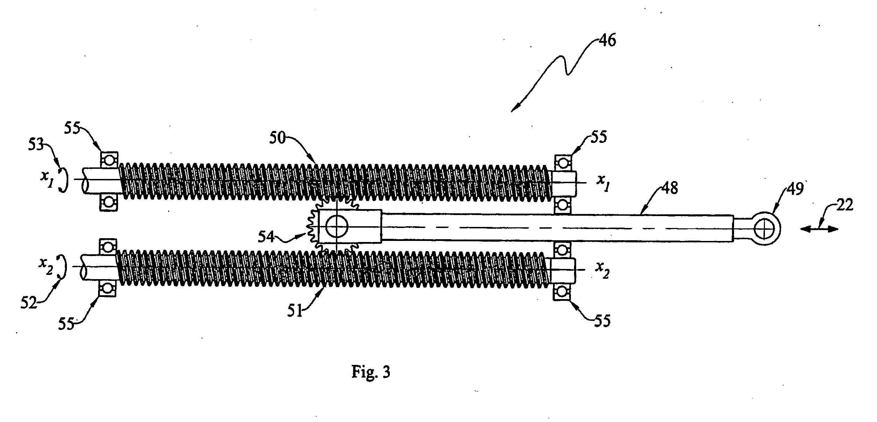

### Third Embodiment (Fig. 3)

Fig. 3 schematically depicts the pertinent portion of a third embodiment, generally indicated at 46. This third embodiment is shown as having an output member 48, provided with an eye 49 at its right end. In this form, however, the ballscrews and racks of the first and second embodiments, have been replaced by first and second worms 50, 51, respectively. The first worm 50 is arranged to be selectively rotated in either angular direction, as indicated by arrow 52, about its axis *x₁* - *x₁*. Similarly, the second worm 51 is arranged to be selectively rotated by suitable structure, as indicated by bidirectional arrow 52, in the appropriate angular direction about its axis *x₂* - *x₂*. An idler wheel 54 is mounted on the left marginal end portion of the output member, and matingly engages the worms. Persons skilled in this art will readily appreciate that the worms are arranged to be selectively rotated by suitable structure, such as motors and gear reduction units, but that this structure has simply been omitted from the view of Fig. 3 in the interest of clarity. The two worms are shown as being journaled to rotate in suitable bearings, severally indicated at 55, at either end.

Thus, if the worms are rotated in the same angular direction at the same angular speed, such motion will be translated into linear motion of the output member. However, should one worm stop (for whatever reason), the output member will continue to move in that same direction attributable to rotation of the other worm, albeit at half the speed. Of course, if the two worms both rotated at different angular speeds, then the output member will be related to the average of the angular speeds of the two worms. Here again, full force will be applied to the output member.

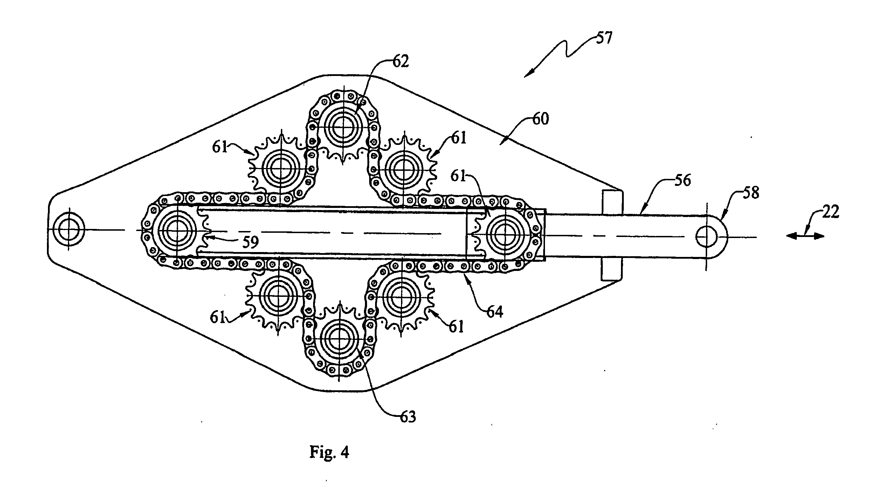

### Fourth Embodiment (Fig. 4)

Referring now to Fig. 4, a fourth embodiment of the improved actuators generally indicated at 57.

Actuator 57 is shown as having an output member 56 having an eye 58 at its rightward end, and an idler sprocket 59 at its leftward end.

The actuator also includes a body indicated at 60. Body 60 is shown as having four idler sprockets, severally indicated at 61, and two driving sprockets 62, 63. These driving sprockets are arranged to be selectively rotated in the appropriate angular directions and at the appropriate angular speeds by suitable means (not shown), such as a motor and gear reduction unit. An endless chain, generally indicated at 64, engages all of the sprockets, as shown.

Thus, if the driving sprockets 62, 63 are rotated in opposite angular directions at the same angular speed, then the endless chain will be moved, and such motion will be translated into linear motion of output member 58. If either driving sprocket becomes immobile while the other driving sprocket moves, then the chain will continue to move, and the output member will be translated at full force, but at half velocity, in the appropriate direction. Here again, if the driving sprockets are rotated at different angular velocities, the output member will be translated at the average speed of their surface velocities.

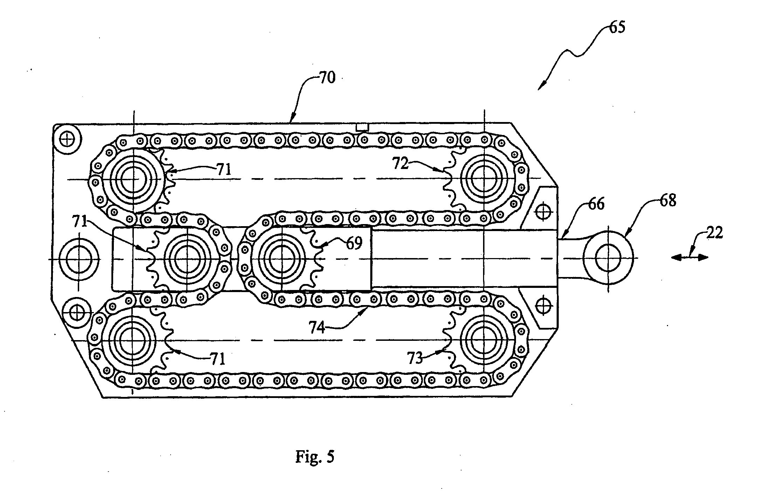

### Fifth Embodiment (Fig. 5)

A fifth form of the improved actuator is generally indicated at 65 in Fig. 5. This form is also shown as including an output member 66 having an eye 68 at its rightward end, and having and idler sprocket 69 at its leftward end. This actuator also includes a body, generally indicated at 70. Three idler sprockets, severally indicated at 71, are mounted on the body. Two driving sprockets 72, 73 are mounted on the body. These driving sprockets are arranged to be selectively rotated in the appropriate angular direction and at the appropriate angular velocity by suitable means (not shown). An endless chain, indicated at 74, passes around the various sprockets as shown. Hence, if the driving sprockets are rotated in opposite directions at the same angular speed, such motion will be translated through the chain to the actuator, which will then be moved horizontally at a speed equal to the average surface speed of the driving sprockets. Should either driving sprocket become stationary (for whatever reason), then the output member will be moved at full force, albeit at half velocity. Here again, the output member will be moved at the average surface speed of the driving sprockets.

Therefore, the present invention broadly provides, in one aspect jam-tolerant dual-redundant differential-summing actuator (*e.g*., 20) that broadly includes a first driver (*e.g*., 23) adapted to be rotated about a first axis *(e.g., x₁ - x₁)*; a second driver (*e.g*., 26) adapted to be rotated about a second axis *(e.g., x₂ - x₂)*; a movable output member (*e.g*., 21); and a linkage (*e.g*., 24, 28, 31, 32, 33, 34, 40) connecting the first and second drivers to the output member such that when the drivers are rotated simultaneously in appropriate angular directions, the output members will be moved in one direction at a first velocity, but, when one member is rotated in an appropriate direction while the driver is stationary, the output member will be moved in the one direction at a second velocity that is substantially equal to one-half of the first velocity; such that motion of the output member in the one direction will continue at half the velocity if one of the drivers becomes stationary.

The invention also provides, in a second aspect, an improved jam-tolerant dual-redundant differential-summing actuator (*e.g*., 41), which broadly includes: a first driver (e.g., 44) adapted to be rotated about a first axis *(e.g., x₁ - x₁)* at a first surface speed; a second driver (*e.g*., 45) adapted to be rotated about a second axis *(e.g., x₂ - x₂)* at a second surface speed; a movable output member; and a linkage (*e.g*., 42, 43, 40) connecting the first and second drivers to the output member such that the output member will be moved at a velocity that is substantially proportional to the average surface speed of the drivers.

As illustrated herein, the invention may be implemented in many different mechanical forms.

### Modifications

The present invention contemplates that many changes and modifications may be made. As indicated above, there are many different mechanical implementations for effecting the motion-translation disclosed herein. The driver may be a screw, a sprocket, a gear, a worm, or the like, The driven member may be a nut, a rack, a chain, or some other member. The driving mechanism may be a motor, possibly acting through a gear reduction unit. The motor may be an electrical motor, or may be some other type of motor. The gear reduction unit is similarly optional.
The various preferred embodiments have been described as being adapted to be supplied with the same input electrical signal. However, this need not invariably obtain. It would be possible to drive the various motors at different speeds, and thus obtain an output velocity which is still proportional to their average speed.
Therefore, while five specific implementations have been shown and described, persons skilled in this art will readily appreciate that various additional changes and modifications may be made without departing from the invention, as defined and differentiated by the following claims.

## Claims

1. A jam-tolerant dual-redundant differential-summing actuator (41), comprising:
a first driver (44) adapted to be rotated about a first axis at a first surface speed;
a second driver (45) adapted to be rotated about a second axis at a second surface speed;
an output member (21) mounted for linear movement; and
a linkage (42, 43, 40) connecting said first and second drivers (44, 45) to said output member (21) **characterised in that** when said first and second drivers (44, 45) rotate at different angular speeds said output member (21) will be moved at a velocity that is substantially proportional to the average surface speed of said drivers (44, 45).
said linkage (42, 43, 40) is arranged such that when said drivers (44, 45) are rotated simultaneously in the appropriate angular directions, the output member (21) will be moved in one direction at a first velocity, but when one driver is rotated in the appropriate direction while the other driver is stationary, said output member (21) will be moved in said one direction at a second velocity that is equal to one-half of said first velocity, whereby motion of said output member (21) in said one direction will continue at half the velocity if one of said drivers becomes stationary.

2. A jam-tolerant dual-redundant differential-summing actuator as set forth in claim 1 wherein said first and second drivers include sprockets (62).

3. A jam-tolerant dual-redundant differential-summing actuator as set forth in claim 2 wherein said linkage includes an endless chain (64).

4. A jam-tolerant dual-redundant differential-summing actuator as set forth in claim 1 wherein said first and second drivers (44, 45) include ballscrews (24, 31).

5. A jam-tolerant dual-redundant differential-summing actuator as set forth in claim 4 wherein each ballscrew carries a rack (33, 34).

6. A jam-tolerant dual-redundant differential-summing actuator as set forth in claim 5 and further comprising:
an idler pinion (40) mounted on said output member (21) and
wherein said idler pinion matingly engages said racks (33, 34).

7. A jam-tolerant dual-redundant differential-summing actuator as set forth in claim 1 wherein said first and second drivers include worms (50, 51).

8. A jam-tolerant dual-redundant differential-summing actuator as set forth in claim 7 and further comprising:
a wheel (54) rotatably mounted on said output member (48) and matingly engaging said worms (50, 51).

9. A jam-tolerant dual-redundant differential-summing actuator as set forth in claim 1 and further comprising:
a first motor (23) for rotating said first driver (44); and
a second motor (26) for rotating said second driver (45).

10. A jam-tolerant dual-redundant differential-summing actuator as set forth in claim 1 wherein the force exerted by said linkage on said output member (21) is constant, and is independent of the velocity of said output member (21).

## Patentansprüche

1. Blockierungstoleranter, dual-redundanter Differentialsummier-Stellantrieb (41), enthaltend:
eine erste Antriebseinrichtung (44), die dazu eingerichtet ist, um eine erste Achse mit einer ersten Arbeitsdrehzahl gedreht zu werden;
eine zweite Antriebseinrichtung (45), die dazu eingerichtet ist, um eine zweite Achse mit einer zweiten Arbeitsdrehzahl gedreht zu werden;
ein Abtriebselement (21), das für eine lineare Bewegung angebracht ist; und
ein Verbindungselement (42, 43, 40), das die erste Antriebseinrichtung (44, 45) mit dem Abtriebselement (21) verbindet, **dadurch gekennzeichnet, dass**, wenn sich die erste und die zweite Antriebseinrichtung (44, 45) mit unterschiedlichen Winkelgeschwindigkeiten drehen, das Abtriebselement (21) mit einer Geschwindigkeit bewegt wird, die im wesentlichen Proportional zur durchschnittlichen Arbeitsdrehzahl der Antriebseinrichtungen (44, 45) ist, wobei das Verbindungselement (42, 43, 40) derart eingerichtet ist, dass, wenn die Antriebseinrichtungen (44, 45) in den geeigneten Winkelrichtungen gleichzeitig gedreht werden, das Abtriebselement (21) in einer Richtung mit einer ersten Geschwindigkeit bewegt wird, wenn jedoch eine Antriebseinrichtung in der geeigneten Richtung gedreht wird, während die andere Antriebseinrichtung unbeweglich bleibt, das Abtriebselement (21) in der einen Richtung mit einer zweiten Geschwindigkeit bewegt wird, die gleich der Hälfte der ersten Geschwindigkeit ist, wodurch die Bewegung des Abtriebselementes (21) in der einen Richtung mit der Hälfte der Geschwindigkeit fortgeführt wird, sofern eine der Antriebseinrichtungen unbewegt ist.

2. Blockierungstoleranter, dual-redundanter Differentialsummier-Stellantrieb nach Anspruch 1, bei dem die erste und die zweite Antriebseinrichtung Zahnräder (62) enthalten.

3. Blockierungstoleranter, dual-redundanter Differentialsummier-Stellantrieb nach Anspruch 2, bei dem das Verbindungselement eine Endloskette (64) enthält.

4. Blockierungstoleranter, dual-redundanter Differentialsummier-Stellantrieb nach Anspruch 1, bei dem die erste und die zweite Antriebseinrichtung (44, 45) Kugelumlaufspindein (24, 31) enthalten.

5. Blockierungstoleranter, dual-redundanter Differentialsummier-Stellantrieb nach Anspruch 4, bei dem jede Kugelumlaufspindel eine Zahnstange (33, 34) trägt.

6. Blockierungstoleranter, dual-redundanter Differentialsummier-Stellantrieb nach Anspruch 5, weiterhin enthaltend:
ein Leerlaufritzel, das an dem Abtriebselement (21) angebracht ist, wobei das Leerlaufritzel passend in die Zahnstangen (33, 34) greift.

7. Blockierungstoleranter, dual-redundanter Differentialsummier-Stellantrieb nach Anspruch 1, bei dem die erste und die zweite Antriebseinrichtung Spiralschnecken (50, 51) enthalten.

8. Blockierungstoleranter, dual-redundanter Differentialsummier-Stellantrieb nach Anspruch 7, weiterhin enthaltend:
ein Rad (54), das drehbar an dem Abtriebselement (48) angebracht ist und passend in die Spiralschnecken (50, 51) greift.

9. Blockierungstoleranter, dual-redundanter Differentialsummier-Stellantrieb nach Anspruch 1, weiterhin enthaltend:
einen ersten Motor (23), der die erste Antriebseinrichtung (44) dreht; und
einen zweiten Motor (26), der die zweite Antriebseinrichtung (45) dreht.

10. Blockierungstoleranter, dual-redundanter Differentialsummier-Stellantrieb nach Anspruch 1, bei dem die Kraft, die von dem Verbindungselement auf das Abtriebselement (21) ausgeübt wird, konstant und von der Geschwindigkeit des Abtriebselementes (21) unabhängig ist.

## Revendications

1. Actionneur sommateur de type différentiel à double redondance, résistant au blocage (41), comprenant :
un premier dispositif d'entraînement (44) adapté pour être entraîné en rotation autour d'un premier axe à une première vitesse de surface ;
un second dispositif d'entraînement (45) adapté pour être entraîné en rotation autour d'un second axe à une seconde vitesse de surface ;
un élément de sortie (21) monté pour le mouvement linéaire ; et
une tringlerie (42, 43, 40) raccordant lesdits premier et second dispositifs d'entraînement (44, 45) audit élément de sortie (21), **caractérisé en ce que**, lorsque lesdits premier et second dispositifs d'entraînement (44, 45) tournent à des vitesses angulaires différentes, ledit élément de sortie (21) est déplacé à une vitesse qui est sensiblement proportionnelle à la vitesse de surface moyenne desdits dispositifs d'entraînement (44, 45),
ladite tringlerie (42, 43, 40) est agencée de sorte que lorsque lesdits dispositifs d'entraînement (44, 45) tournent simultanément dans les directions angulaires appropriées, l'élément de sortie (21) est déplacé dans une direction à une première vitesse, mais lorsqu'un dispositif d'entraînement tourne dans la direction appropriée alors que l'autre dispositif d'entraînement est fixe, ledit élément de sortie (21) est déplacé dans ladite une direction à une seconde vitesse qui est égale à la moitié de ladite première vitesse, moyennant quoi le mouvement dudit élément de sortie (21) dans ladite une direction continue à la moitié de la vitesse si l'un desdits dispositifs d'entraînement est fixe.

2. Actionneur sommateur de type différentiel à double redondance, résistant au blocage selon la revendication 1, dans lequel lesdits premier et second dispositifs d'entraînement comprennent des pignons (62).

3. Actionneur sommateur de type différentiel à double redondance, résistant au blocage selon la revendication 2, dans lequel ladite tringlerie comprend une chaîne sans fin (64).

4. Actionneur sommateur de type différentiel à double redondance, résistant au blocage selon la revendication 1, dans lequel lesdits premier et second dispositifs d'entraînement (44, 45) comprennent des vis sphériques (24, 31).

5. Actionneur sommateur de type différentiel à double redondance, résistant au blocage selon la revendication 4, dans lequel chaque bille sphérique supporte une crémaillère (33, 34).

6. Actionneur sommateur de type différentiel à double redondance, résistant au blocage selon la revendication 5, et comprenant en outre :
un pignon fou (40) monté sur ledit élément de sortie (21), et
dans lequel ledit pignon fou se met en prise par engrènement avec lesdites crémaillères (33, 34).

7. Actionneur sommateur de type différentiel à double redondance, résistant au blocage selon la revendication 1, dans lequel lesdits premier et second dispositifs d'entraînement comprennent des vis sans fin (50, 51).

8. Actionneur sommateur de type différentiel à double redondance, résistant au blocage selon la revendication 7, et comprenant en outre :
une roue (54) montée de manière rotative sur ledit élément de sortie (48) et mettant en prise par engrènement lesdites vis sans fin (50, 51).

9. Actionneur sommateur de type différentiel à double redondance, résistant au blocage selon la revendication 1, et comprenant en outre :
un premier moteur (23) pour faire tourner ledit premier dispositif d'entraînement (44) ; et
un second moteur (26) pour faire tourner ledit second dispositif d'entraînement (45).

10. Actionneur sommateur de type différentiel à double redondance, résistant au blocage selon la revendication 1, dans lequel la force exercée par ladite tringlerie sur ledit élément de sortie (21) est constante, et est indépendante de la vitesse dudit élément de sortie (21).
